(19) **Europäisches Patentamt / European Patent Office / Office européen des brevets**

(11) **EP 3 793 206 B1**

(12) # EUROPEAN PATENT SPECIFICATION

(45) Date of publication and mention
of the grant of the patent:
**10.05.2023 Bulletin 2023/19**

(21) Application number: **19803469.6**

(22) Date of filing: **10.04.2019**

(51) International Patent Classification (IPC):
***H04L 41/122*** *(2022.01)*

(52) Cooperative Patent Classification (CPC):
**H04L 41/122; H04L 12/46; H04Q 11/00**

(86) International application number:
**PCT/CN2019/082123**

(87) International publication number:
**WO 2019/218812 (21.11.2019 Gazette 2019/47)**

(54) **PHYSICAL OPTICAL NETWORK VIRTUALIZATION MAPPING METHOD AND APPARATUS, AND CONTROLLER AND STORAGE MEDIUM**

VERFAHREN UND VORRICHTUNG ZUR DARSTELLUNG DER VIRTUALISIERUNG EINES PHYSIKALISCHEN OPTISCHEN NETZWERKS UND STEUERGERÄT UND SPEICHERMEDIUM

PROCÉDÉ ET APPAREIL DE MAPPAGE AVEC VIRTUALISATION DE RÉSEAU OPTIQUE PHYSIQUE, CONTRÔLEUR, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2018 CN 201810474683**

(43) Date of publication of application:
**17.03.2021 Bulletin 2021/11**

(73) Proprietor: **ZTE Corporation**
**Shenzhen City,**
**Guangdong Province 518057 (CN)**

(72) Inventors:
• **LI, Zhen**
  **Shenzhen, Guangdong 518057 (CN)**
• **CHEN, Jie**
  **Shenzhen, Guangdong 518057 (CN)**
• **YU, Hongbin**
  **Shenzhen, Guangdong 518057 (CN)**
• **XIAO, Hongyun**
  **Shenzhen, Guangdong 518057 (CN)**

• **ZHANG, Xinping**
  **Shenzhen, Guangdong 518057 (CN)**

(74) Representative: **Studio Torta S.p.A.**
**Via Viotti, 9**
**10121 Torino (IT)**

(56) References cited:
CN-A- 102 904 794    CN-A- 106 059 799
CN-B- 102 223 281    US-A1- 2015 036 541
US-A1- 2015 172 115    US-A1- 2016 087 846
US-A1- 2017 288 905

• **CHEN BOWEN ET AL: "Cost-Effective Survivable Virtual Optical Network Mapping in Flexible Bandwidth Optical Networks", JOURNAL OF LIGHTWAVE TECHNOLOGY, IEEE, USA, vol. 34, no. 10, 15 May 2016 (2016-05-15), pages 2398-2412, XP011606025, ISSN: 0733-8724, DOI: 10.1109/JLT.2016.2530846 [retrieved on 2016-04-13]**

**Description**

## CROSS REFERENCE TO RELATED APPLICATIONS

This disclosure is based on a Chinese patent application No. 201810474683.2 filed on May 17, 2018, and claims priority of the Chinese patent application.

## TECHNICAL FIELD

The present disclosure relates to the field of network virtualization technology, in particular to a virtualization mapping method and apparatus for a physical optical network, an SDN controller and a storage medium.

## BACKGROUND

In a current commercial network architecture, operators generally uses technologies such as virtual local area network (VLAN), virtual private network (VPN), active and programmable network (APN), and overlay network, but there is no common technical standard among these technologies but the portability among these technologies is poor. In an era of new technologies such as cloud computing and software defined network (SDN), virtual private networks constructed in a traditional protocol encapsulation manner cannot meet current requirements.

In order to construct a brand-new Internet architecture, the network virtualization technology is used for promoting a fundamental reform for future network architecture. Network virtualization is an emerging network technology that abstracts a shared underlying infrastructure through a virtualization technology and provides a uniform programmable interface, and simultaneously maps a plurality of virtual optical networks, which are isolated from each other and have different topologies, onto a shared infrastructure, and thus providing differentiated services to users. Therefore, in order to meet the current demand for the network virtualization technology, the technology realizes a plurality of parallel virtual optical networks or virtual subnets on a common network infrastructure through abstraction, reconfiguration, isolation, and the like. A virtual optical network formed in this way could be used as a physical optical network and could control network resources exclusive to the virtual optical network, thereby realizing logic separation between two roles: network infrastructure and network service.

Therefore, in order to perform a new network protocol test on the infrastructure of the Internet while not affecting normal service flow of the existing Internet, the network virtualization technology has to have characteristics such as, good separation, flexibility, high expansion, fast arrangement and enhancing innovation. On the basis above, no effective technical solution for effectively using network resources has been proposed in the existing technology.

In CHEN BOWEN ET AL, "Cost-Effective Survivable Virtual Optical Network Mapping in Flexible Bandwidth Optical Networks", it is disclosed a method for addressing the minimum network cost problem for survivable virtual optical network mapping in flexible bandwidth optical networks. For each virtual link, dedicated-path protection, i.e., primary path and backup path, is provided to guarantee high survivability on the physical network. To simplify the virtual links mapping, an extended auxiliary graph is constructed by coordinating the virtual optical network and the physical network. An integer linear program (ILP) model, the LBSD mapping approach, the LCSD mapping approach are developed to minimize the network cost for a given set of VONs.

US20150036541A1 discloses an inter-domain virtual network mapping method, an interdomain virtual network and an inter-domain virtual network mapping system are provided. The method comprises: receiving an inter-domain virtual network request; obtaining a latest physical network architecture information of each of N network domains; calculating an optimized mapping solution according to the latest physical network architecture information of the N network domains to divide an inter-domain virtual network into N virtual sub-networks, each virtual subnetwork corresponding to one of the N network domains; sending each virtual sub-network to a corresponding network domain thereof and performing a mapping in each network domain; initializing SUM=0, and updating SUM according to a result of the mapping in each network domain; determining whether SUM is equal to N; if yes, instructing each network domain to distribute a physical network source for the interdomain virtual network request; and if no, instructing each network domain to undo any procedure.

US20150172115A1 discloses systems and methods for assigning virtualized network elements to physical resources in a cloud computing environment. A resource request is received as input indicating a required number of virtual machines and a set of virtual flows, each of the virtual flows indicating a connection between two virtual machines which need to communicate with one another. Each of the requested virtual machines is assigned to a physical server. The set of virtual flows can be modified to remove any virtual flow connecting virtual machines which have been assigned to the same physical server. Each of the virtual flows in the modified set is assigned to a physical link. If a bandwidth capacity of a requested virtual flow is greater than the available bandwidth of a single physical link between servers, multiple links can be allocated to the virtual flow.

# EP 3 793 206 B1

## SUMMARY

The technical solution to be solved by the present disclosure is to provide a virtualization mapping method and apparatus for a physical optical network, an SDN controller and a storage medium.

In the present disclosure, the virtualization mapping method for a physical optical network includes: selecting, from physical nodes of the physical optical network, N target physical nodes to which virtual nodes of a virtual link are to be mapped, according to node mapping weights between the virtual nodes of the virtual link and the physical nodes, where N is a positive integer; selecting a first physical link from target physical links constituted by the N target physical nodes, according to link mapping weights between the virtual link and physical links, when determining that all virtual nodes of the virtual link can be successfully mapped to the target physical nodes; and mapping the virtual link to the first physical link, wherein the selecting, from the physical nodes of the physical optical network, wherein, for each of the virtual nodes of the virtual link, the node mapping weight between the virtual node and a target physical node is determined according to switching capacity resources requested by the virtual node from the target physical node, remaining switching capacity resources of the target physical node, remaining affordable service amount of the target physical node, and switching resources requested by the virtual node, and wherein the link mapping weight between the virtual link and a target physical link is determined according to band width resources requested by the virtual link from the target physical link, remaining band width resources of the target physical link, switching capacity resources requested by each of the virtual nodes from the target physical nodes in the target physical link, remaining switching capacity resources of each of the target physical nodes in the target physical link, and remaining affordable service amount of each of the target physical nodes in the target physical link, wherein the determining that all virtual nodes of the virtual link can be successfully mapped to the target physical nodes comprises: determining that each of the virtual nodes of the virtual link can be successfully mapped to the target physical node according to a preset mapping limitation; wherein the mapping limitation comprises switching capacity resources requested by each of the virtual nodes being not greater than remaining switching capacity resources of each of the target physical nodes.

In the present disclosure, the virtualization mapping apparatus for a physical optical network includes: a node selecting module configured to select, from physical nodes of the physical optical network, N target physical nodes to which virtual nodes of a virtual link are to be mapped, according to node mapping weights between the virtual nodes of the virtual link and the physical nodes, where N is a positive integer; a determining module configured to determine that all virtual nodes of the virtual link can be successfully mapped to the target physical nodes; a link selecting module configured to select a first physical link from target physical links constituted by the N target physical nodes, according to mapping weights between the virtual link and physical links; and a mapping module configured to map the virtual link to the first physical link, wherein, the physical optical network virtualization mapping apparatus further comprises a weight determining module configured to determine, for each of the virtual nodes of the virtual link, the node mapping weight between the virtual node and a target physical node according to switching capacity resources requested by the virtual node from the target physical node, remaining switching capacity resources of the target physical node, remaining affordable service amount of the target physical node, and switching resources requested by the virtual node; and determine the link mapping weight between the virtual link and a target physical link according to band width resources requested by the virtual link from the target physical links, remaining band width resources of the target physical link, switching capacity resources requested by each of the virtual nodes from the target physical nodes in the target physical link, remaining switching capacity resources of each of the target physical nodes in the target physical link, and remaining affordable service amount of each of the target physical nodes in the target physical link; wherein the determining module is configured to determine that each of the virtual nodes of the virtual link can be successfully mapped to the target physical node according to a preset mapping limitation; wherein the mapping limitation comprises switching capacity resources requested by each of the virtual nodes being not greater than remaining switching capacity resources of each of the target physical nodes..

In the present disclosure, a software defined network controller includes a memory and a processor. The memory stores a computer program. The processor executes the computer program to implement steps in the method above.

In the present disclosure, a computer storage medium stores a computer program. When executed by at least one processor, the computer program implements steps of the method above.

In embodiments of the present disclosure, the objective of sufficient adopting physical optical network resources is realized, utilization of network resources during network virtualization mapping is increased, cost of network operation and complexity of network control are reduced, and extendibility is improved.

## BRIEF DESCRIPTION OF THE DRAWINGS

FIG. 1 is a flowchart illustrating a virtualization mapping method for a physical optical network according to an embodiment of the present disclosure;

FIG. 2 is a schematic diagram illustrating virtual mapping under a software defined optical network architecture according to an embodiment of the present application;

FIGS. 3 and 4 are schematic diagrams illustrating construction of an auxiliary graph provided in an embodiment of the present disclosure;

FIG. 5 is a schematic diagram illustrating a structure of a virtualization mapping apparatus for a physical optical network according to an embodiment of the present disclosure;

FIG. 6 is a schematic diagram illustrating a structure of an SDN controller according to an embodiment of the present disclosure.

## DETAILED DESCRIPTION

In order to solve the problem in the existing technology, the present disclosure provides a virtualization mapping method and apparatus for a physical optical network, an SDN controller and a storage medium. The present disclosure is further described with reference to the drawings and embodiments. It shall be appreciated that the embodiments described herein are only for explaining rather than limiting the present disclosure.

In the following description, expressions such as "module", "part" or "unit" are only used to facilitate describing the present disclosure, and they do not have particular meanings. Therefore, "module", "part" or "unit" can all be used in the present disclosure.

Expressions such as "first" and "second" for distinguishing elements are only used to facilitate describing the present disclosure, and they do not have particular meanings.

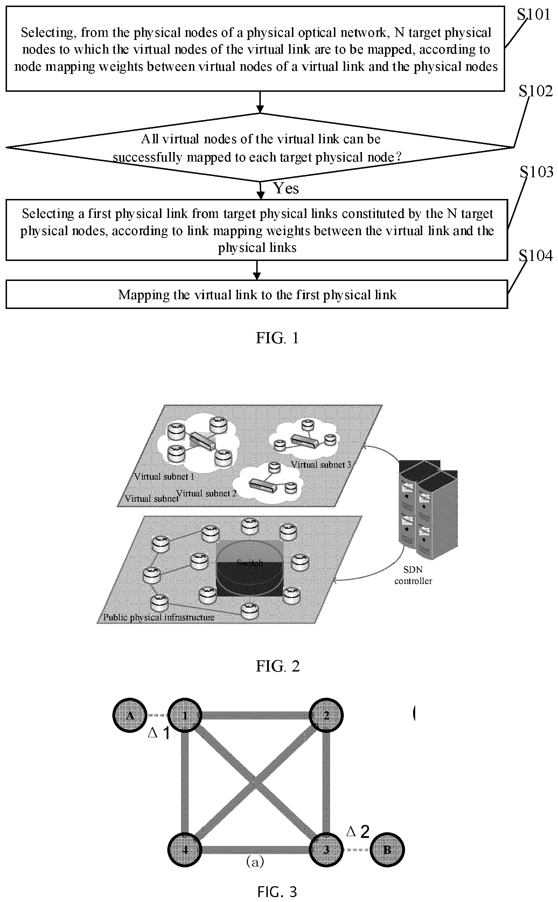

The present disclosure provides a virtualization mapping method for a physical optical network, as shown in FIG. 1, including:

S101: selecting, from physical nodes of the physical optical network, N target physical nodes to which virtual nodes of a virtual link are to be mapped, according to node mapping weights between virtual nodes of the virtual link and the physical nodes; wherein N is a positive integer;
S102: determining whether all virtual nodes of the virtual link can be successfully mapped to selected target physical nodes;
S103: selecting a first physical link from target physical links constituted by the N target physical nodes, according to link mapping weights between the virtual link and physical links, when determining that all virtual nodes of the virtual link can be successfully mapped to the target physical nodes;
S104: mapping the virtual link to the first physical link.

In the embodiment of the present disclosure, the N target physical nodes for the virtual nodes of the virtual link are selected from the physical nodes of the physical optical network according to the node mapping weights. When it is determined that all the virtual nodes of the virtual link can be successfully mapped to the N target physical nodes, the first physical link is selected, according to the link mapping weights, from the physical links constituted by the N target physical nodes, so that the virtual link is mapped to the first physical link. In this way, physical optical network resources can be sufficiently used, utilization of network resources during network virtualization mapping can be effectively increased, cost of network operation and complexity of network control can be effectively reduced, and extendibility is improved.

The embodiment of the present disclosure provides an overall solution for a virtualization mapping algorithm for the physical optical network, which optimizes network resource allocation, and realizes network virtualization to reduce network operation and maintenance cost. This embodiment facilitates realizing unified management of the network, realizing load balance, reducing cost for constructing networks, simplifying steps for deploying subnets, providing a disaster recovery mechanism, and realizing virtualization of a flexible spectrum physical optical network. The physical optical network in this embodiment may also be referred to as a physical transmission network.

This embodiment may be provided based on an optical transmission network architecture having flexible spectrum. This embodiment could map virtual nodes of a virtual optical network to physical nodes of a physical optical network; and it could extend and expand virtual links to be mapped in a physical optical network according to a mapping relationship between virtual nodes and physical nodes, until all virtual links are mapped to physical links. It also realizes coordinated mapping between virtual nodes and virtual links. By adding virtual nodes in a virtual optical network to an expanded physical optical network and according to a mapping limitation condition for the virtual nodes, a mapping relationship between the virtual nodes and the physical nodes is determined, and thus virtual optical network mapping is realized.

That is to say, this embodiment could establish a mapping relationship between a virtual optical network having a high resource-utilization and the physical optical network. The mapping includes mapping of virtual nodes and virtual links. In this way, an effective virtual transmission subnet is formed, thereby the network resource utilization of the transmission network is effectively improved and an operation cost of the network is reduced.

In some embodiments, the first physical link may at least be a physical link that could provide switching capacity resources required by the virtual nodes.

In some other embodiments, the first physical link may be a physical link that could provide switching capacity resources required by the virtual nodes and satisfy a transmission performance condition. For example, if the virtual nodes are mapped to the physical link, a transmission rate for the service data is the fastest and/or the most stable, or the transmission rate can reach a preset threshold.

In still some other embodiments, the first physical link may be a physical link that could provide switching capacity resources required by the virtual nodes and that has a specific effect on physical nodes corresponding to the first physical link, where, the effect satisfies a predetermined condition. For example, after N physical nodes are mapped by virtual nodes, a physical link corresponding to physical nodes with the least increase of resource ratio is the first physical link.

This embodiment may be realized in an SDN network architecture. By performing macroscopic scheduling on network resources of a transmission network using a SDN controller, and setting a sub-controller when necessary to control the virtual transmission subnet, better feasibility and operability are realized, which realize virtualization mapping and facilitates future expansion of new functions. Further, virtualization in the optical network is realized by using the software defined network technology for the physical optical network. The constructed software defined optical network provides an effective centralized control theory support for the virtualization mapping method.

The network virtualization technology refers to flexibly making a flow transfer strategy for bottom-layer data transmission by separating a control plane and a data plane in a bottom-layer network device infrastructure while ensuring reliability and isolation of bottom-layer data transmission. There is an inter-mapping relationship between a virtual optical network and an actual physical optical network. Virtual optical network mapping refers to a mapping method of simultaneously mapping, by a control plane, a plurality of virtual optical networks with different topologies to a shared data plane without damaging bottom-layer resource constraints, while ensuring high utilization of the bottom-layer resources. This is an important content in the field of virtualization. In an existing physical optical network, the mapping method for a virtual optical network is not perfect, which has problems such as low resource utilization, and thus seriously affecting generation and stable operation of the virtual optical network.

SDN technology provides a new network architecture that has been developed in recent years. The technology enables separation of a forwarding plane from a control plane so as to realize centralized control. An OpenFlow-based software-defined network is a commercial application of the network virtualization technology. With reference to a principle of an operation system, all network devices in a network are considered to be manageable resources. By abstracting them as a network operation system, not only particular details of the bottom-layer network devices are omitted, but a unified management view and a programming interface are provided for upper-layer applications. Therefore, based on a platform such as the network operation system, a user may develop various applications and needs of applications for the network resources are satisfied by defining logical network topologies through software, regardless of the physical topology structure of the bottom-layer network. The SDN technology includes three parts: an infrastructure, an application and a controller. Herein, the infrastructure, the application and the controller respectively correspond to an infrastructure provider, a service provider and a virtual optical network provider in the network virtualization technology respectively. The virtualization mapping method indicated in this embodiment is realized based on the SDN architecture, i.e., to realize comprehensive scheduling for public physical infrastructure through centralized control of SDN. Besides, based on the SDN control architecture, it is more convenient to provide a controller for a single virtual subnet.

The method in this embodiment may include firstly constructing a virtual optical network mapping architecture to realize effective mapping of network resources in a physical optical network; further, a double-layer cross-layer control architecture including a common physical infrastructure layer and a virtual optical network layer controlled in centralization by SDN may be adopted.

FIG. 2 is a schematic diagram illustrating virtual mapping performed in a software defined optical network architecture. The public physical infrastructure layer includes actual physical optical network communication switching apparatus which is an actual physical optical network. The virtual optical network layer includes a plurality of subnets of the virtual optical network. In order to guarantee actual requirements of users on the virtual optical network, the subnets of the virtual optical network are designed to be constructed to meet requirements of the users, so that effective bearing of network user services may be realized. In addition, both the virtual optical network layer and the public physical infrastructure layer are controlled by an SDN controller. The controller controls two network layers in a cross-layer mode. Besides, an effective mapping relationship between the virtual optical network and the physical optical network is obtained by executing the method in this embodiment. In this way, effective network resources are abstracted from the physical optical network. Constructing and operation of the virtual subnets is supported by the mapping relationship. Through stable operation of the virtual subnet, requirements of a user on networks are met, so that user network service requirements are effectively supported by the whole physical optical network.

In this embodiment, based on the above solution, the following constraints are included before performing step S101:

Constraint one: determining, for any one of the physical links, that a sum of bandwidth required by the virtual links mapped to the physical link is less than a maximum bandwidth that the physical link can provide; and
Constraint two: determining, for any one of the physical nodes, that a sum of services of virtual nodes mapped to the physical node is less than the number of services that the physical node can provide.

That is to say, the method in the embodiment may be implemented under the above conditions. Herein, constraint one may be expressed by formula 1, indicating that a sum of all the bandwidth required by the virtual links mapped to one physical link in a virtual topology is less than the maximum bandwidth that the physical link can provide; constraint two may be expressed by formula 2, indicating that a sum of all services of virtual nodes mapped to one physical node in the virtual topology is less than the number of services that the physical node can provide.

$$\sum_{n\in|T^{v}|}\sum_{(i,j)\in|L^{v}|}B^{v}(i,j)\leq B^{P}(k,p) \tag{1}$$

$$\sum_{n\in|T^{v}|}\sum_{m\in|N^{v}|}S^{v}(i)\leq S^{v}(k) \tag{2}$$

Where, $(i,j)$ denotes a link between a virtual node $i$ and a virtual node $j$, $T^v$ denotes a collection of services, $L^v$ denotes a collection of virtual links mapped to a physical link $(k, p)$, $N^v$ denotes a collection of virtual nodes mapped to a physical node $k$, $B^v(i, j)$ denotes a bandwidth taken by a single service on the virtual link $(i, j)$, $B^P(k, p)$ denotes a maximum bandwidth that may be provided by the actual physical link $(k, p)$, $S^v(i)$ denotes the number of services on the virtual node $i$, and $S^v(k)$ denotes the number of services that may be provided by the physical node $k$.

In the following, the virtualization mapping method for the physical optical network of this embodiment is described based on a mapping scenario. Herein, the virtual optical transmission network is denoted by $T^v(N^v, L^v, C^v, B^v)$, the physical optical transmission network is denoted by $T^p(N^p, L^p, C^p, B^p)$, N denotes a collection of nodes in a network, L denotes a collection of links in the network, C denotes a switching capacity of a node in the network, and B denotes a bandwidth capacity of a link in the network.

In this embodiment, the virtualization mapping method for a physical optical network includes weight quantification, sequencing matching and determination of mapping relationships in the processes of the weight quantification and sequencing matching. The weight quantification includes calculation of node mapping weights between virtual nodes and physical nodes and calculation of link mapping weights between virtual links and physical links.

Based on the above solution, the step of selecting, from the physical nodes of the physical optical network, the N target physical nodes to which virtual nodes of a virtual link are to be mapped, according to node mapping weights between virtual nodes of the virtual link and the physical nodes may include: constructing an auxiliary graph connecting the virtual optical network with the physical optical network. Herein, the mapping relationship may be determined according to a preset mapping limiting condition.

That is to say, based on the above solution, determining that the virtual nodes of the virtual link can be successfully mapped to the target physical nodes includes:
determining that each of the virtual nodes of the virtual link can be successfully mapped to each of the target physical nodes according to a preset mapping limitation; wherein the mapping limitation comprises switching capacity resources requested by each of the virtual nodes being not greater than remaining switching capacity resources of each of the target physical nodes.

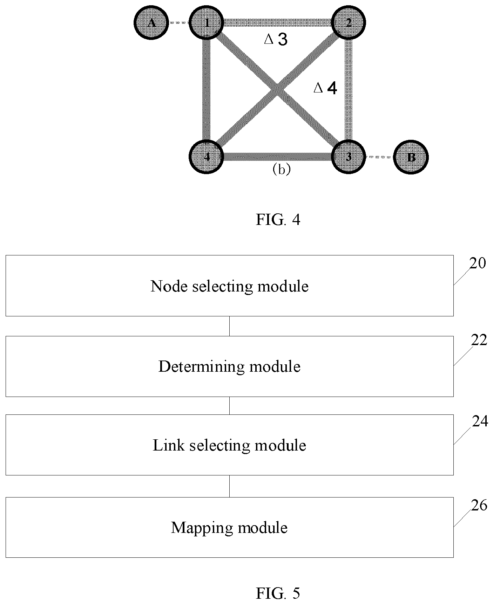

As shown in FIG. 3 and/or FIG. 4, constructing the auxiliary graph refers to forming, by adding auxiliary lines, a two-dimensional network graph including virtual nodes, virtual auxiliary lines, physical nodes and actual physical links. Herein, $\Delta_1$ and $\Delta_2$ denote link mapping weights which indicate quantitative assignment of weights between the virtual nodes and the physical nodes. $\Delta_3$ and $\Delta_4$ denote link mapping weights which indicates quantitative assignment of weights of the actual physical links.

The sequencing matching includes selecting the most appropriate physical node and physical link for mapping based on the physical links and auxiliary line weights after the weight quantification ends. In this way, a mapping relationship between the target physical nodes, a target physical link, and the virtual nodes, the virtual link is constructed to finally realize virtual mapping.

Herein, the node mapping weight between a virtual node and a target physical node may be determined according to switching capacity resources requested by the virtual node of the virtual link from the target physical node, remaining switching capacity resources of the target physical node, remaining affordable service amount of the target physical node, switching resources requested by the virtual node, and a geographical distance between the virtual node and the target physical node.

For example, the node mapping weight between a virtual node of the virtual link and a target node may be calculated by the following formula:

$$\Delta_n = \frac{R_{req}}{R_{res}} \cdot \frac{1}{R_{numres} + 1} + \sqrt{\frac{V_{req}^i}{R_{res}^k} \cdot \frac{1}{R_{numres}^k + 1}} \cdot \sqrt{\frac{V_{req}^j}{R_{res}^p} \cdot \frac{1}{R_{numres}^p + 1}} + l^2 \qquad (3)$$

In the formula, $i$ and $j$ denote virtual nodes at two ends of the virtual link respectively; $k$ and $p$ denote physical nodes at two ends of the physical link respectively ; $R_{req}$ denotes switching capacity resource requested by the virtual node from the target physical node; $R_{res}$ denotes remaining switching capacity resources in the target physical node; $R_{numres}$ denotes remaining affordable service amount of the target physical node; $V_{req}$ denotes a switching resource requested by the virtual node; $l$ denotes a geographical distance between the virtual node and the target physical node.

Further, the link mapping weight between the virtual link and a target physical links may be determined according to bandwidth resources requested by the virtual link from the target physical link, remaining bandwidth resources of the target physical link, the switching capacity resources requested by the virtual node from the target physical nodes in the target physical link, the remaining switching capacity resources in the target physical nodes in the target physical link, the remaining service affordable amount of the target physical nodes in the target physical link. Therefore, the calculation formula of the link mapping weight is as follows:

$$\Delta_r = \frac{B_{req}^{i,j}}{B_{res}^{k,p}} + \sqrt{\frac{R_{req}^i}{R_{res}^k} \cdot \frac{1}{R_{numres}^k + 1}} \cdot \sqrt{\frac{R_{req}^j}{R_{res}^p} \cdot \frac{1}{R_{numres}^p + 1}} \qquad (4)$$

In the formula, $i$ and $j$ respectively denote virtual nodes at two ends of the virtual link; $k$ and $p$ respectively denote physical nodes at two ends of the physical link; $B_{req}$ denotes the bandwidth resource requested by the virtual link from the target physical link; $B_{res}$ denotes the remaining bandwidth resources of the target physical link; $R_{req}$ denotes the switching capacity resources requested by the virtual nodes from the target physical nodes in the target physical link; $R_{res}$ denotes remaining switching capacity resources in the target physical nodes in the target physical link; $R_{numres}$ denotes remaining affordable service amount of the target physical nodes in the target physical link.

A formula of the mapping limitation condition is as follows:

$$\sum_{m \in |N_i^v|} R_{req} \le R_m \qquad (5)$$

Herein, $R_m$ denotes the largest network resource capacity affordable by a single target physical node.

In this embodiment, node mapping weights between the virtual nodes and the respective target physical nodes to be mapped can be calculated through formula (3). The calculated node mapping weights are compared, and appropriate physical nodes are selected in an ascending order as the target physical nodes to be mapped. Herein, "to be mapped" means that no mapping is implemented yet but that mapping is assumed to be implemented or mapping will be implemented. Herein, a weight of each target physical node is not a value in one-dimension, but is based on a certain virtual link. Thus, the virtual link cannot be ignored when determining a node mapping weight. That is to say, one target physical node to be mapped has different node mapping weights under different virtual link conditions.

In this embodiment, when the virtual nodes are about to be mapped successfully, formula (4) can be used to calculate the link mapping weights between the virtual link and the target physical links. Similarly, based on the link weights, the optimal target physical link is selected to perform mapping. Then it is determined whether the mapping is successful according to formula (5). If the mapping succeeds, the mapping ends; otherwise, the target physical nodes of the virtual nodes are reselected according to matchings. Herein, formula (3) is a limiting condition that requested resources are less than total usable physical resources during resource mapping, so as to guarantee that resources are available.

In this embodiment, the virtualization mapping method for a physical optical network may include:

Step 1: the SDN controller collects and records user types and service types in an optical transmission network (i.e., physical optical network) and network resource usage of the optical transmission network. The number of virtual subnets to be generated is obtained according to effective information in the optical transmission network.

Step 2: an auxiliary graph is constructed. Choose one virtual subnet to expand topology of the physical optical transmission network $T^p(N^p,L^p,C^p,B^p)$ through nodes of the virtual optical transmission network $T^v(N^v,L^v,C^v,B^v)$.
Step 3: calculate and quantify mapping weights of respective virtual nodes of the virtual optical transmission network $T^v(N^v,L^v,C^v,B^v)$ that are mapped to the target physical nodes of the physical optical transmission network $T^p(N^p,L^p, C^p,B^p)$. Based on the solution, with under the auxiliary graph, N target physical nodes to which virtual nodes of a virtual link are to be mapped are selected from the physical nodes of the physical optical network based on a preset number for selection in accordance with the mapping weights of the virtual nodes and the physical nodes arranged in an ascending order. For example, two physical nodes with the least weights may be selected as the target physical nodes to which the virtual nodes at the two ends of the virtual link are to be mapped.

For example, a current virtual link is $(i, j)$, and switching resources requested by the virtual node $i$ is 20G. The remaining switching capacity in the target physical node of the virtual node $i$ is 100G. The remaining number of services affordable by the virtual node $i$ is 40. The switching resources requested by the virtual node $j$ are 15G. The remaining switching capacity in the physical node to be mapped by the virtual node $j$ is 150G. The remaining number of services affordable by the virtual node $j$ is 40. A geographical distance between the unified virtual node and physical node is 0.4. When the values are put into formula (3), a quantified weight from the virtual node $i$ to the physical node is 0.1709.

Step 4: bandwidths required by the virtual link in the virtual optical transmission network $T^v(N^v,L^v,C^v,B^v)$ are ranked in a descending order to obtain an array $\Lambda(i,j)$. In implementation, the step may be optional. This step guarantees that virtual links that consume more bandwidth resources are firstly mapped.

Step 5: a virtual link $\Lambda_1(i,j)$ is selected from the virtual link array $\Lambda(i,j)$ according to bandwidth required by virtual links in the virtual optical network ranked in a descending order, and then virtual mapping is performed. This step includes:

selecting, from physical nodes of the physical optical network, N target physical nodes to which virtual nodes of a virtual link are to be mapped, according to node mapping weights between virtual nodes of the virtual link and physical nodes;
determining that all the virtual nodes of the virtual link can be successfully mapped to the selected physical nodes, according to formula (5); selecting a first physical link from target physical links constituted by the N target physical nodes, according to link mapping weights between the virtual link and physical links; and mapping the virtual link to the first physical link.
determining that the virtual nodes of the virtual link cannot be successfully mapped to the N target physical nodes, according to formula (5); selecting a second physical link from physical links constituted by remaining physical nodes, according to the link mapping weights. The remaining physical nodes are physical nodes in the physical optical network, excluding physical nodes to which the virtual nodes of the virtual link cannot be mapped; determining that the virtual nodes of the virtual link can be successfully mapped to the physical nodes of the second physical link; mapping the virtual link to the second physical link. Herein, the physical nodes that cannot be successfully mapped are the physical nodes that cannot be successfully mapped in the selected target physical nodes.

Herein, based on the above solution, a target physical link with the smallest link mapping weight is selected, from the target physical links constituted by the N target physical nodes, as the first physical link.

Herein, when a first virtual node of the virtual link fails to be mapped to a selected target physical node, based on the above solution, the step of selecting the second physical link from the physical links constituted by the remaining physical nodes according to the link mapping weights includes:
selecting the second physical link from the physical links constituted by the first physical node and the second physical node according to the link mapping weights; herein, the target physical nodes to which the second virtual node of the virtual link can be successfully mapped is taken as the first physical node, and any physical node in the remaining physical nodes is taken as the second physical node.

For example, the step mainly includes three scenarios:

One: it is determined according to formula (5) that virtual nodes at two ends of $\Lambda_1(i,j)$ may be mapped to the N target physical nodes, and at this time, a physical link with the smallest link mapping weight is selected according to formula (3) to perform mapping.

Two: it is determined according to formula (5) that neither of the virtual nodes at the two ends of $\Lambda_1(i, j)$ can be mapped to the N target physical nodes. For example, when it is determined that the switching capacity resources required by $i$ and $j$ are more than the remaining switching capacity resources of the current target physical nodes $k$ and $\rho$, the physical link is reselected and the determination is made again. Herein, in a reselection process, the node mapping weights of $i$ and $j$ may be calculated according to formula (3), and the target physical nodes may be selected in an ascending manner.

Three: if only one virtual node of the two virtual nodes $i$ and $j$ can be successfully mapped, a physical link with the smallest weight and meeting requirements is selected based on the node that can be successfully mapped, and then unmapped virtual node are mapped to another node in the physical link. If the physical node does not meet the requirements of unmapped virtual node, the smallest link mapping weight is reselected to perform mapping until success. For example, if *i* is mapped as *k*, *k* is fixed. The above determination is made for other physical nodes in an ascending manner of mapping weights between node *j* and the physical nodes calculated according to formula (3) in the node mapping weights, until *p* is found to be mapped to *j*.

The virtual mapping method in this embodiment may effectively realize a transmission network architecture of a physical transmission network. Compared with existing technologies, due to use of a SDN centralized controlled network architecture, a global network perspective may be realized during virtualization mapping, and better service quality may be provided for a user's request for a virtual optical network. By setting an auxiliary graph and quantifying weights between virtual nodes and physical nodes and quantifying weights of the physical links between physical nodes, a weight setting for meeting a user service request may be provided. Therefore, by an optimal matching, an optimized result of a network mapping relationship, an improvement on the network virtualization mapping technology, optimization of network resources, and high-efficiency of virtual mapping relationships are realized. In this way, network resources and application resources are saved, network resource utilization and success rate of generation of virtual subnets are increased, and thus, virtualization in physical optical networks is supported, optical network service quality is ensured and the user's requirement on network service is met.

The present disclosure provides a physical optical network virtualization mapping apparatus, corresponding to the method in the above embodiment. As shown in FIG. 5, the apparatus includes:

a node selecting module 20 configured to a node selecting module configured to select, from physical nodes of the physical optical network, N target physical nodes to which virtual nodes of a virtual link are to be mapped, according to node mapping weights between the virtual nodes of the virtual link and the physical nodes;
a determining module 22 configured to determine that all virtual nodes of the virtual link can be successfully mapped to the target physical nodes;
a link selecting module 24 configured to select a first physical link from target physical links constituted by the N target physical nodes, according to mapping weights between the virtual link and physical links; and
a mapping module 26 configured to map the virtual link to the first physical link.

In this embodiment, based on the above solution, the node selecting module 20 is further configured to select, from the physical nodes of the physical optical network, the N target physical nodes, according to the node mapping weights in an ascending order.

In this embodiment, the determining module 22 is configured to determine that each of the virtual nodes of the virtual link can be successfully mapped to each of the target physical nodes according to a preset mapping limitation; wherein the mapping limitation comprises switching capacity resources requested by each of the virtual nodes being not greater than remaining switching capacity resources of each of the target physical nodes.

In this embodiment, the link selecting module 24 is further configured to select, from the target physical links constituted by the N target physical nodes, a target physical link with the smallest link mapping weight as the first physical link.

In this embodiment, the apparatus further includes:

a weight determining module configured to determine for each of the virtual nodes of the virtual link, the node mapping weight between the virtual node and each of the target physical nodes , according to switching capacity resources requested by the virtual node from the target physical node, remaining switching capacity resources of the target physical node, remaining affordable service amount of the target physical node, switching resources requested by the virtual node, and a geographic distance between the virtual node and the target physical node; and
determine the link mapping weight between the virtual link and each of the target physical links according to band width resources requested by the virtual link from the target physical links, remaining band width resources of the target physical link, switching capacity resources requested by each of the virtual nodes from the target physical nodes in the target physical link, remaining switching capacity resources of each of the target physical nodes in the target physical link, and remaining affordable service amount of each of the target physical nodes in the target physical link.

In this embodiment, the link selecting module 24 is further configured to select a second physical link from physical links constituted by remaining physical nodes, according to the link mapping weights, when the determining node determines that the virtual nodes of the virtual link cannot be successfully mapped to each of the target physical nodes; the remaining physical nodes are physical nodes in the physical optical network, excluding physical nodes to which the virtual nodes of the virtual link cannot be mapped;

the determining node 22 is further configured to determine that the virtual nodes of the virtual link can be successfully mapped to physical nodes of the second physical link; and
the mapping node 26 is further configured to map the virtual link to the second physical link.

In this embodiment, the link selecting module 24 is configured to select the second physical link from the physical links constituted by first physical nodes and second physical nodes according to the link mapping weights; herein, the target physical nodes to which the second virtual node of the virtual link can be successfully mapped are taken as the first physical nodes, and any other physical nodes in the remaining physical nodes is taken as the second physical nodes.

In this embodiment, the apparatus further includes:
a constructing module configured to construct an auxiliary graph connecting the virtual optical network and the physical optical network before selecting, from the physical nodes of the physical optical network, target physical nodes to which virtual nodes of the virtual link are to be mapped according to node mapping weights between the virtual nodes and the physical nodes.

In this embodiment, the link selecting module 24 is further configured to select the virtual link according to bandwidths required by virtual links in the virtual optical network in a descending order, before selecting, selecting, from the physical nodes of the physical optical network, N target physical nodes to which virtual nodes of a virtual link are to be mapped, according to the node mapping weights between the virtual nodes of the virtual link and the physical nodes.

In this embodiment, before selecting, from the physical nodes of the physical optical network, the target physical nodes to which the virtual nodes of the virtual link are to be mapped according to the node mapping weights between the virtual nodes and the physical nodes, the determining node 22 is further configured to determine that a sum of the bandwidth required by virtual links mapped to any physical link is less than the maximum bandwidth that the physical link can provide, and determine that a sum of services of virtual nodes mapped to any physical node is less than the number of services that the physical node can provide.

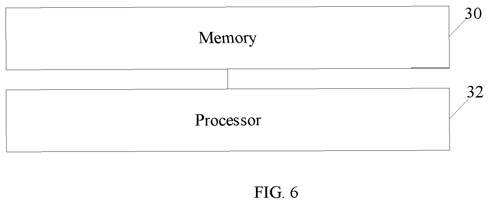

The present disclosure provides a software defined network controller. As shown in FIG. 6, the controller includes a memory 30 and a processor 32. The memory stores a computer program. The processor 32 executes the computer program to realize the steps in the method according to any one of the above embodiments.

The present disclosure provides a computer storage medium storing a computer program. When executed by at least one processor, the computer program implements steps of the method according to any one of the above embodiments.

The computer readable storage medium in the present disclosure may be an RAM memory, a flash memory, an ROM memory, an EPROM memory, an EEPROM memory, a register, a hard disc, a portable hard drive, and a CD-ROM, or a storage medium of any other form known in the art. A storage medium may be coupled to a processor to enable the processor to read information from or write information into the storage medium. The storage medium may be a part of the processor. The processor and the storage medium may be located in an application specific integrated circuit.

The specific embodiments described above further describe the objective, technical solutions and advantageous effects of the present disclosure in detail.

**Claims**

1. A virtualization mapping method for a physical optical network, comprising:

    selecting (S101), from physical nodes of the physical optical network, N target physical nodes to which virtual nodes of a virtual link are to be mapped, according to node mapping weights between the virtual nodes of the virtual link and the physical nodes, where N is a positive integer;
    selecting (S103) a first physical link from target physical links constituted by the N target physical nodes, according to link mapping weights between the virtual link and physical links, when determining that all virtual nodes of the virtual link can be successfully mapped to the target physical nodes; and
    mapping (S104) the virtual link to the first physical link,
    wherein, for each of the virtual nodes of the virtual link, the node mapping weight between the virtual node and a target physical node is determined according to switching capacity resources requested by the virtual node from the target physical node, remaining switching capacity resources of the target physical node, remaining affordable service amount of the target physical node, and switching resources requested by the virtual node; and
    wherein the link mapping weight between the virtual link and a target physical link is determined according to band width resources requested by the virtual link from the target physical link, remaining band width resources of the target physical link, switching capacity resources requested by each of the virtual nodes from the target physical nodes in the target physical link, remaining switching capacity resources of each of the target physical nodes in the target physical link, and remaining affordable service amount of each of the target physical nodes in the target physical link,

wherein the determining that all virtual nodes of the virtual link can be successfully mapped to the target physical nodes comprises: determining that each of the virtual nodes of the virtual link can be successfully mapped to the target physical node according to a preset

mapping limitation; wherein the mapping limitation comprises switching capacity resources requested by each of the virtual nodes being not greater than remaining switching capacity resources of each of the target physical nodes.

2. The method according to claim 1, wherein the selecting, from the physical nodes of the physical optical network, the N target physical nodes to which the virtual nodes of the virtual link are to be mapped comprises:
selecting, from the physical nodes of the physical optical network, the N target physical nodes, according to the node mapping weights in an ascending order.

3. The method according to claim 1, wherein the selecting the first physical link from the target physical links constituted by the N target physical nodes comprises:
selecting, from the target physical links constituted by the N target physical nodes, a target physical link with the smallest link mapping weight as the first physical link.

4. The method according to claim 1, wherein the method further comprises:

selecting a second physical link from physical links constituted by remaining physical nodes, according to the link mapping weights, when determining that the virtual nodes of the virtual link cannot be successfully mapped to the target physical nodes; the remaining physical nodes are physical nodes in the physical optical network, excluding physical nodes to which the virtual nodes of the virtual link cannot be successfully mapped; and mapping the virtual link to the second physical link when it is determined that the virtual nodes of the virtual link cannot be successfully mapped to the physical nodes of the second physical link.

5. The method according to any one of claims 1 to 4, comprising preforming the following step before selecting, from the physical nodes of the physical optical network, N target physical nodes to which virtual nodes of a virtual link are to be mapped, according to the node mapping weights between the virtual nodes of the virtual link and the physical nodes:
selecting the virtual link according to bandwidths required by virtual links in the virtual optical network in a descending order.

6. A physical optical network virtualization mapping apparatus, comprising:

a node selecting module (20) configured to select, from physical nodes of the physical optical network, N target physical nodes to which virtual nodes of a virtual link are to be mapped, according to node mapping weights between the virtual nodes of the virtual link and the physical nodes, where N is a positive integer;
a determining module (22) configured to determine that all virtual nodes of the virtual link can be successfully mapped to the target physical nodes;
a link selecting module (24) configured to select a first physical link from target physical links constituted by the N target physical nodes, according to mapping weights between the virtual link and physical links; and
a mapping module (26) configured to map the virtual link to the first physical link,
wherein, the physical optical network virtualization mapping apparatus further comprises a weight determining module configured to determine, for each of the virtual nodes of the virtual link, the node mapping weight between the virtual node and a target physical node according to switching capacity resources requested by the virtual node from the target physical node, remaining switching capacity resources of the target physical node, remaining affordable service amount of the target physical node, and switching resources requested by the virtual node; and determine the link mapping weight between the virtual link and a target physical link according to band width resources requested by the virtual link from the target physical links, remaining band width resources of the target physical link, switching capacity resources requested by each of the virtual nodes from the target physical nodes in the target physical link, remaining switching capacity resources of each of the target physical nodes in the target physical link, and remaining affordable service amount of each of the target physical nodes in the target physical link;
wherein the determining module (22) is configured to determine that each of the virtual nodes of the virtual link can be successfully mapped to the target physical node according to a preset mapping limitation; wherein the mapping limitation comprises switching capacity resources requested by each of the virtual nodes being not greater than remaining switching capacity resources of each of the target physical nodes.

7. The apparatus according to claim 6, wherein the node selecting module (20) is further configured to select, from the physical nodes of the physical optical network, the N target physical nodes, according to the node mapping weights in an ascending order.

8. The apparatus according to claim 6, wherein the link selecting module (24) is further configured to select, from the target physical links constituted by the N target physical nodes, a target physical link with the smallest link mapping weight as the first physical link.

9. The apparatus according to claim 6, wherein the link selecting module (24) is further configured to select a second physical link from physical links constituted by remaining physical nodes, according to the link mapping weights, when the determining module determines that the virtual nodes of the virtual link cannot be successfully mapped to the target physical nodes; the remaining physical nodes are physical nodes in the physical optical network, excluding physical nodes to which the virtual nodes of the virtual link cannot be mapped;

> the determining module (22) is further configured to determine that the virtual nodes of the virtual link can be successfully mapped to physical nodes of the second physical link; and
> the mapping module (26) is further configured to map the virtual link to the second physical link.

10. A software defined network controller, comprising a memory and a processor; the memory storing a computer program, and the processor executing the computer program to implement steps in the method according to any one of claims 1 to 5.

11. A computer storage medium, storing a computer program that, when executed by at least one processor, implements steps of the method according to any one of claims 1 to 5.

**Patentansprüche**

1. Verfahren zur Virtualisierungszuordnung für ein physisches optisches Netzwerk, umfassend:

> Auswahl (S101) von N physischen Knoten des physischen optischen Netzwerks, den die virtuelle Knoten einer virtuellen Verbindung zugeordnet werden sollen, entsprechend den Knotenzuordnungsgewichten zwischen den virtuellen Knoten der virtuellen Verbindung und den physischen Knoten, wobei N eine positive ganze Zahl ist; Auswählen (S103) einer ersten physischen Verbindung aus physischen Zielverbindungen, die durch die N physischen Zielknoten gebildet werden, entsprechend den Verbindungszuordnungsgewichten zwischen der virtuellen Verbindung und physischen Verbindungen, wenn festgestellt wird, dass alle virtuellen Knoten der virtuellen Verbindung erfolgreich den physischen Zielknoten zugeordnet werden können; und
> Zuordnung (S104) der virtuellen Verbindung zu der ersten physischen Verbindung,
> wobei für jeden der virtuellen Knoten der virtuellen Verbindung das Verbindungszuordnungsgewicht zwischen dem virtuellen Knoten und einem physischen Zielknoten entsprechend den Vermittlungskapazitätsressourcen, die von dem virtuellen Knoten von dem physischen Zielknoten angefordert werden, den verbleibenden Vermittlungskapazitätsressourcen des physischen Zielknotens, dem verbleibenden erschwinglichen Dienstbetrag des physischen Zielknotens und den von dem virtuellen Knoten angeforderten vermittlungstechnischen Ressourcen bestimmt wird; und
> wobei das Verbindungszuordnungsgewicht zwischen der virtuellen Verbindung und einer physischen Zielverbindung entsprechend den von der virtuellen Verbindung von der physischen Zielverbindung angeforderten Bandbreitenressourcen, den verbleibenden Bandbreitenressourcen der physischen Zielverbindung, den von jedem der virtuellen Knoten von den physischen Zielknoten in der physische Zielverbindung angeforderten Vermittlungskapazitätsressourcen, den verbleibenden Vermittlungskapazitätsressourcen jedes der physischen Zielknoten in der physische Zielverbindung und der verbleibenden erschwinglichen Dienstmenge jedes der physischen Zielknoten in der physische Zielverbindung bestimmt wird,
> wobei die Bestimmung, dass alle virtuellen Knoten der virtuellen Verbindung erfolgreich den physischen Zielknoten zugeordnet werden können, Folgendes umfasst:
> Bestimmung, dass jeder der virtuellen Knoten der virtuellen Verbindung entsprechend einer voreingestellten Zuordnungsbeschränkung dem physischen Zielknoten erfolgreich zugeordnet werden kann; wobei die Zuordnungsbeschränkung Vermittlungskapazitätsressourcen umfasst, die von jedem der virtuellen Knoten angefordert werden und nicht größer sind als die verbleibenden Vermittlungskapazitätsressourcen jedes der physischen Zielknoten.

2. Verfahren nach Anspruch 1, wobei die Auswahl der N physischen Zielknoten, denen die die virtuellen Knoten der virtuellen Verbindung zugeordnet werden sollen, aus den physischen Knoten des physischen optischen Netzwerks Folgendes umfasst:
Auswahl der N physischen Zielknoten aus den physischen Knoten des physischen optischen Netzwerks entsprechend den Knotenzuordnungsgewichten in aufsteigender Reihenfolge.

3. Verfahren nach Anspruch 1, wobei die Auswahl der ersten physischen Verbindung aus den physischen Zielverbindungen, die durch die N physischen Zielknoten gebildet werden, Folgendes umfasst:
Auswahl einer physischen Zielverbindung mit dem kleinsten Verbindungszuordnungsgewicht als erste physische Verbindung aus den von den N physischen Zielknoten gebildeten physischen Zielverbindungen.

4. Verfahren nach Anspruch 1, wobei das Verfahren weiter Folgendes umfasst:

Auswählen einer zweiten physischen Verbindung aus physischen Verbindungen, die durch verbleibende physische Knoten gebildet werden, entsprechend den Verbindungszuordnungsgewichten, wenn bestimmt wird, dass die virtuellen Knoten der virtuellen Verbindung nicht erfolgreich den physischen Zielknoten zugeordnet werden können; wobei die verbleibenden physischen Knoten physische Knoten in dem physischen optischen Netzwerk sind, ausgenommen physische Knoten, denen die virtuellen Knoten der virtuellen Verbindung nicht erfolgreich zugeordnet werden können; und
Zuordnung der virtuellen Verbindung zu der zweiten physischen Verbindung, wenn bestimmt wird, dass die virtuellen Knoten der virtuellen Verbindung nicht erfolgreich den physischen Knoten der zweiten physischen Verbindung zugeordnet werden können.

5. Verfahren nach einem der Ansprüche 1 bis 4, umfassend die Durchführung des folgenden Schritts, bevor aus den physischen Knoten des physischen optischen Netzwerks N physische Zielknoten ausgewählt werden, auf die virtuelle Knoten einer virtuellen Verbindung zugeordnet werden sollen, entsprechend den Knotenzuordnungsgewichten zwischen den virtuellen Knoten der virtuellen Verbindung und den physischen Knoten:
Auswahl der virtuellen Verbindung entsprechend der von den virtuellen Verbindungen im virtuellen optischen Netzwerk benötigten Bandbreiten in absteigender Reihenfolge.

6. Einrichtung zur Virtualisierungszuordnung eines physischen optischen Netzwerks, die Folgendes umfasst:

ein Knotenauswahlmodul (20), das so konfiguriert ist, dass es aus den physischen Knoten des physischen optischen Netzwerks N physische Zielknoten auswählt, denen virtuelle Knoten einer virtuellen Verbindung zugeordnet werden sollen, und zwar entsprechend den Knotenzuordnungsgewichten zwischen den virtuellen Knoten der virtuellen Verbindung und den physischen Knoten, wobei N eine positive ganze Zahl ist;
ein Bestimmungsmodul (22), das so konfiguriert ist, dass es bestimmt, dass alle virtuellen Knoten der virtuellen Verbindung erfolgreich den physischen Zielknoten zugeordnet werden können;
ein Verbindungsauswahlmodul (24), das so konfiguriert ist, dass es eine erste physische Verbindung aus den physischen Zielverbindungen auswählt, die durch die N physischen Zielknoten gebildet werden, entsprechend den Zuordnungsgewichten zwischen der virtuellen Verbindung und den physischen Verbindungen; und
ein Zuordnungsmodul (26), das so konfiguriert ist, dass es die virtuelle Verbindung der ersten physischen Verbindung zuordnet,
wobei die Einrichtung zur Virtualisierungszuordnung eines physischen optischen Netzwerks weiterhin ein Modul zur Bestimmung des Gewichts umfasst, das so konfiguriert ist, dass es für jeden der virtuellen Knoten der virtuellen Verbindung das Knotenzuordnungsgewicht zwischen dem virtuellen Knoten und einem physischen Zielknoten entsprechend den Vermittlungskapazitätsressourcen, die von dem virtuellen Knoten von dem physischen Zielknoten angefordert werden, den verbleibenden Vermittlungskapazitätsressourcen des physischen Zielknotens, dem verbleibenden erschwinglichen Dienstbetrag des physischen Zielknotens und den von dem virtuellen Knoten angeforderten Vermittlungsressourcen bestimmt; und Bestimmen des Verbindungszuordnungsgewichts zwischen der virtuellen Verbindung und einer physischen Zielverbindung entsprechend den von der virtuellen Verbindung von den physischen Zielverbindungen angeforderten Bandbreitenressourcen, den verbleibenden Bandbreitenressourcen der physischen Zielverbindung, den von jedem der virtuellen Knoten von den physischen Zielknoten in der physischen Zielverbindung angeforderten Vermittlungskapazitätsressourcen, den verbleibenden Vermittlungskapazitätsressourcen von jedem der physischen Zielknoten in der physischen Zielverbindung und dem verbleibenden erschwinglichen Dienstumfang von jedem der physischen Zielknoten in der physischen Zielverbindung;

wobei das Bestimmungsmodul (22) so konfiguriert ist, dass es bestimmt, dass jeder der virtuellen Knoten der virtuellen Verbindung entsprechend einer voreingestellten Zuordnungsbeschränkung erfolgreich dem physischen Zielknoten zugeordnet werden kann; wobei die Zuordnungsbeschränkung Vermittlungskapazitätsressourcen umfasst, die von jedem der virtuellen Knoten angefordert werden und nicht größer sind als die verbleibenden Vermittlungskapazitätsressourcen jedes der physischen Zielknoten.

7. Einrichtung nach Anspruch 6, wobei das Knotenauswahlmodul (20) weiterhin so konfiguriert ist, dass es aus den physischen Knoten des physischen optischen Netzwerks die N physischen Zielknoten entsprechend den Knotenzuordnungsgewichten in aufsteigender Reihenfolge auswählt.

8. Einrichtung nach Anspruch 6, wobei das Verbindungsauswahlmodul (24) weiterhin so konfiguriert ist, dass es aus den physischen Zielverbindungen, die durch die N physischen Zielknoten gebildet werden, eine physische Zielverbindung mit dem kleinsten Verbindungszuordnungsgewicht als erste physische Verbindung auswählt.

9. Einrichtung nach Anspruch 6, wobei das Verbindungsauswahlmodul (24) weiterhin so konfiguriert ist, dass es eine zweite physische Verbindung aus physischen Verbindungen auswählt, die durch verbleibende physische Knoten gebildet werden, und zwar entsprechend den Verbindungszuordnungsgewichten, wenn der Bestimmungsmodul bestimmt, dass die virtuellen Knoten der virtuellen Verbindung nicht erfolgreich den physischen Zielknoten zugeordnet werden können; wobei die verbleibenden physischen Knoten physische Knoten in dem physischen optischen Netzwerk sind, ausgenommen physische Knoten, denen die virtuellen Knoten der virtuellen Verbindung nicht zugeordnet werden können;

das Bestimmungsmodul (22) weiter konfiguriert ist, um zu bestimmen, dass die virtuellen Knoten der virtuellen Verbindung erfolgreich den physischen Knoten der zweiten physischen Verbindung zugeordnet werden können; und
das Zuordnungsmodul (26) weiterhin so konfiguriert ist, dass es die virtuelle Verbindung der zweiten physischen Verbindung zuordnet.

10. Softwaredefinierte Netzwerksteuerung, die einen Speicher und einen Prozessor umfasst, wobei der Speicher ein Computerprogramm speichert und der Prozessor das Computerprogramm ausführt, um Schritte in dem Verfahren nach einem der Ansprüche 1 bis 5 auszuführen.

11. Computerspeichermedium, das ein Computerprogramm speichert, das, wenn es von mindestens einem Prozessor ausgeführt wird, Schritte des Verfahrens nach einem der Ansprüche 1 bis 5 ausführt.

**Revendications**

1. Procédé de mise en correspondance avec virtualisation pour un réseau optique physique, comprenant :

la sélection (S101), parmi des noeuds physiques d'un réseau optique physique, de N noeuds physiques cibles avec lesquels des noeuds virtuels d'une liaison virtuelle sont à mettre en correspondance, en fonction de poids de correspondance de noeud entre les noeuds virtuels de la liaison virtuelle et les noeuds physiques, N étant un entier positif;
la sélection (S103) d'une première liaison physique parmi des liaisons physiques cibles consistant en les N noeuds physiques cibles, en fonction de poids de correspondance de liaison entre la liaison virtuelle et les liaisons physiques, lorsqu'il est déterminé que tous les noeuds virtuels de la liaison virtuelle peuvent être correctement mis en correspondance avec les noeuds physiques cibles ; et
la mise en correspondance (S104) de la liaison virtuelle avec la première liaison physique,
dans lequel, pour chacun des noeuds virtuels de la liaison virtuelle, le poids de correspondance de noeud entre le noeud virtuel et un noeud physique cible est déterminé en fonction de ressources de capacité de commutation demandées par le noeud virtuel auprès du noeud physique cible, de ressources de capacité de commutation restantes du noeud physique cible, d'une quantité de services accessibles restante du noeud physique cible, et de ressources de commutation demandées par le noeud virtuel ; et
dans lequel le poids de correspondance de liaison entre la liaison virtuelle et une liaison physique cible est déterminé en fonction de ressources de bande passante demandées par la liaison virtuelle auprès de la liaison physique cible, de ressources de bande passante restantes de la liaison physique cible, de ressources de capacité de commutation demandées par chacun des noeuds virtuels auprès des noeuds physiques cibles dans la liaison physique cible, des ressources de capacité de commutation restantes de chacun des noeuds physiques cibles dans la liaison physique cible, et d'une quantité de services accessibles cible de chacun des noeuds physiques cibles dans la liaison physique cible,
dans lequel la détermination selon laquelle tous les noeuds virtuels de la liaison virtuelle peuvent être correctement mis en correspondance avec les noeuds physiques cibles comprend : la détermination selon laquelle chacun des noeuds virtuels de la liaison virtuelle peut être correctement mis en correspondance avec le noeud physique cible en fonction d'une limitation de correspondance prédéfinie ; dans lequel la limitation de correspondance comprend des ressources de capacité de commutation demandées par chacun des noeuds virtuels ne devant pas excéder des ressources de capacité de commutation restantes de chacun des noeuds physiques cible.

2. Procédé selon la revendication 1, dans lequel la sélection, parmi les noeuds physiques du réseau optique physique, des N noeuds physiques cibles avec lesquels les noeuds virtuels de la liaison virtuelle sont à mettre en correspondance comprend :
la sélection, parmi les noeuds physiques du réseau optique physique, des N noeuds physiques cibles, en fonction des poids de correspondance de noeud par ordre croissant.

3. Procédé selon la revendication 1, dans lequel la sélection de la première liaison physique parmi les liaisons physiques cibles consistant en les N noeuds physiques cibles comprend :
la sélection, parmi les liaisons physiques cibles consistant en les N noeuds physiques cibles, d'une liaison physique cible avec le plus petit poids de correspondance de liaison en tant que première liaison physique.

4. Procédé selon la revendication 1, dans lequel le procédé comprend en outre :

la sélection d'une seconde liaison physique parmi des liaisons physiques consistant en des noeuds physiques restants, en fonction des poids de correspondance de liaison, lorsqu'il est déterminé que les noeuds virtuels de la liaison virtuelle ne peuvent pas être correctement mis en correspondance avec les noeuds physiques cibles ; les noeuds physiques restants sont des noeuds physiques dans le réseau optique physique, hormis les noeuds physiques avec lesquelles les noeuds virtuels de la liaison virtuelle ne peuvent pas être correctement mis en correspondance ; et
la mise en correspondance de la liaison virtuelle avec la seconde liaison physique lorsqu'il est déterminé que les noeuds virtuels de la liaison virtuelle ne peuvent pas être correctement mis en correspondance avec les noeuds physiques de la seconde liaison physique.

5. Procédé selon l'une quelconque des revendications 1 à 4, comprenant la réalisation de l'étape suivante avant la sélection, parmi les noeuds physiques du réseau optique physique, des N noeuds physiques cibles avec lesquels des noeuds virtuels d'une liaison virtuelle sont à mettre en correspondance, en fonction des poids de correspondance de noeud entre les noeuds virtuels de la liaison virtuelle et les noeuds physiques :
la sélection de la liaison virtuelle en fonction de bandes passantes demandées par des liaisons virtuelles dans le réseau optique virtuel par ordre décroissant.

6. Appareil de mise en correspondance avec virtualisation de réseau optique physique, comprenant :

un module de sélection de noeud (20) configuré pour sélectionner, parmi des noeuds physiques du réseau optique physique, N noeuds physiques cibles avec lesquels des noeuds virtuels d'une liaison virtuelle sont à mettre en correspondance, en fonction de poids de correspondance de noeud entre les noeuds virtuels de la liaison virtuelle et les noeuds physiques, N étant un entier positif;
un module de détermination (22) configuré pour déterminer que tous les noeuds virtuels de la liaison virtuelle peuvent être correctement mis en correspondance avec les noeuds physiques cibles ;
un module de sélection de liaison (24) configuré pour sélectionner une première liaison physique parmi des liaisons physiques cibles consistant en les N noeuds physiques cibles, en fonction de poids de correspondance entre la liaison virtuelle et les liaisons physiques ; et
un module de mise en correspondance (26) configuré pour mettre en correspondance la liaison virtuelle avec la première liaison physique,
dans lequel, l'appareil de mise en correspondance avec virtualisation de réseau optique physique comprend en outre un module de détermination de poids configuré pour déterminer, pour chacun des noeuds virtuels de la liaison virtuelle, le poids de correspondance de noeud entre le noeud virtuel et un noeud physique cible en fonction de ressources de capacité de commutation demandées par le noeud physique auprès du noeud physique cible, de ressources de capacité de commutation restantes du noeud physique cible, d'une quantité de services accessibles restante du noeud physique cible, et de ressources de commutation demandées par le noeud virtuel ; et déterminer le poids de correspondance de liaison entre la liaison virtuelle et une liaison physique cible en fonction de ressources de bande passante demandées par la liaison virtuelle auprès des liaisons physiques cibles, de ressources de bande passante restantes de la liaison physique cible, de ressources de capacité de commutation demandées par chacun des noeuds virtuels auprès des noeuds physiques cibles dans la liaison physique cible, de ressources de capacité de commutation restantes de chacun des noeuds physiques cibles dans la liaison physique cible, et d'une quantité de services accessibles restante de chacun des noeuds physiques cibles dans la liaison physique cible ;

dans lequel le module de détermination (22) est configuré pour déterminer que chacun des noeuds virtuels de la liaison virtuelle peut être correctement mis en correspondance avec le noeud physique cible en fonction d'une limitation de correspondance prédéfinie ; dans lequel la limitation de correspondance comprend des ressources de capacité de commutation demandées par chacun des noeuds virtuels ne devant pas excéder des ressources de capacité de commutation restantes de chacun des noeuds physiques cible.

7. Appareil selon la revendication 6, dans lequel le module de sélection de noeud (20) est en outre configuré pour sélectionner, parmi les noeuds physiques du réseau optique physique, les N noeuds physiques cibles, en fonction des poids de correspondance de noeud par ordre croissant.

8. Appareil selon la revendication 6, dans lequel le module de sélection de liaison (24) est en outre configuré pour sélectionner, parmi les liaisons physiques cibles consistant en les N noeuds physiques cibles, une liaison physique cible avec le plus petit poids de correspondance de liaison comme première liaison physique.

9. Appareil selon la revendication 6, dans lequel le module de sélection de liaison (24) est en outre configuré pour sélectionner une seconde liaison physique parmi des liaisons physiques consistant en des noeuds physiques restants, en fonction des poids de correspondance de liaison, lorsque le module de détermination détermine que les noeuds virtuels de la liaison virtuelle ne peuvent pas correctement être mis en correspondance avec les noeuds physiques cibles ; les noeuds physiques restants sont des noeuds physiques dans le réseau optique physique, hormis les noeuds physiques avec lesquelles les noeuds virtuels de la liaison virtuelle ne peuvent pas être mis en correspondance ;

le module de détermination (22) est en outre configuré pour déterminer que les noeuds virtuels de la liaison virtuelle peuvent être correctement mis en correspondance avec des noeuds physiques de la seconde liaison physique ; et
le module de mise en correspondance (26) est en outre configuré pour mettre en correspondance la liaison virtuelle avec la seconde liaison physique.

10. Contrôleur de réseau défini par logiciel, comprenant une mémoire et un processeur ; la mémoire stockant un programme informatique, et le processeur exécutant le programme informatique pour mettre en oeuvre des étapes dans le procédé selon l'une quelconque des revendications 1 à 5.

11. Support de stockage informatique, stockant un programme informatique qui, lorsqu'il est exécuté par au moins processeur, met en oeuvre des étapes du procédé selon l'une quelconque des revendications 1 à 5.

Selecting, from the physical nodes of a physical optical network, N target physical nodes to which the virtual nodes of the virtual link are to be mapped, according to node mapping weights between virtual nodes of a virtual link and the physical nodes

S101

All virtual nodes of the virtual link can be successfully mapped to each target physical node?

S102

Yes

Selecting a first physical link from target physical links constituted by the N target physical nodes, according to link mapping weights between the virtual link and the physical links

S103

Mapping the virtual link to the first physical link

S104

FIG. 1

FIG. 2

(a)

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810474683
- US 20150036541 A1

- US 20150172115 A1

**Non-patent literature cited in the description**

- **CHEN BOWEN et al.** *Cost-Effective Survivable Virtual Optical Network Mapping in Flexible Bandwidth Optical Networks*